# EUROPEAN PATENT SPECIFICATION

(11) **EP 2 347 685 B1**
(45) Date of publication and mention of the grant of the patent: **10.05.2017**
(21) Application number: 09825759.5
(22) Date of filing: 09.11.2009
(51) Int. Cl.: A47J 19/00, A47J 31/00, A47J 31/44

(54) **JUICE CUP COVER MECHANISM FOR JUICE EXTRACTOR**
SAFTBECHERDECKELMECHANISMUS FÜR EINEN ENTSAFTER
MÉCANISME DE COUVERCLE DE RÉCIPIENT DESTINÉ À CONTENIR DU JUS POUR CENTRIFUGEUSE

(30) Priority: 12.11.2008 CN 200820146364 U
(43) Date of publication of application: 27.07.2011
(73) Proprietor: Tsann Kuen (Zhangzhou) Enterprise Co., Ltd., Fujian 363000 (CN)
(72) Inventor: LI, Chita, Tainan City Taiwan (CN)
(74) Representative: Verscht, Thomas Kurt Albert
(86) International application number: PCT/CN2009/074863
(87) International publication number: WO 2010/054584

(56) References cited:
- EP-A1- 1 905 332
- WO-A2-2006/124246
- CN-U- 87 209 343
- CN-Y- 2 862 913
- CN-Y- 2 925 324
- CN-Y- 2 925 324
- CN-Y- 201 316 159
- JP-A- 2002 238 747
- US-A- 6 089 143
- US-A1- 2008 198 688

## Description

### Field of the invention

The present invention relates to the structure of the juice cup, especially relates to the juice cup cover of juice machine.

### Background of the invention

In the existing juice machine or the juice cup cover, the steam through holes are directly disposed therein, during the hot process, the steam are dispersed outside through said steam through holes, when it needs to add food into the cup, the cup cover must be taken off; or a central cover is sleeved in the cup cover, and a pressure release hole is disposed on the center of the said central cover, the steam is dispersed from said pressure release hole, when it needs to add food into the cup, the cup cover or the central cover must be taken off.

However, the user may easily be burned by the steam dispersed from said first kind of juice machine during the hot process, and it is inconvenient to add food into the cup, the user may easily be burned during the adding process; the user may easily be burned by the steam dispersed from said second kind of juice machine, too, moreover, when the pressure in the cup is excessive, the central cover may be wholly jacked, it will not only burn the user, but also the food will flow out, so the second kind of juice machine is inconvenient for adding food into the cup, too.

Chinese patent with application number 200620129448.4 disclosed a kind of "central cover of juice machine", a central cover is disposed above said cup body, a first blocking body and a second blocking body are disposed in said central cover, said first blocking body is disposed on the center of the central cover, and the second blocking body is above the first blocking body and symmetrical, wherein, the cutting line of the first and second blocking bodies is the same straight line, and below the second blocking body is a pressure channel, when the juice machine is producing juice, hot air can be released through the pressure channel, and the first and second blocking bodies can prevent the juice from spraying out, so as to improve the safety and convenience of juice machine in use. Although the juice machine of this invention may not easily burn the consumer, it is still inconvenient to add food into the juice cup.

WO 2006/124246 discloses another juice machine with similar inconveniences.

### Summary of the invention

The main object of the present invention is to overcome the inconvenience and insecurity of the conventional juice machine in use, and to provide a safe and convenient juice cup cover of juice machine.

The technical solution applied by the present invention is to provide a juice cup cover according to appended claim 1.

Preferably, the upper edge of side wall of said smaller cover extends outward to form a second blocking portion, the vertical position of said second blocking portion is higher than the edge position of the opening of said big cover, a steam channel is formed by the space between said second blocking portion and the edge of the opening of said big cover, said depressed strips and said steam through holes.

Preferably, said cylinder wall is a circular cylinder wall, correspondingly, said small cover is a circular cup body structure, the outer side wall of said small cover is closely attached to the protruding strips of said cylinder wall.

Preferably, the opening of said big cover is disposed on a side of the center of the top surface of the big cover, the edge of said opening is close to the edge of the top surface of said big cover.

Preferably, the upper end of the side wall of said small cover extends outward to form said handle, and the terminal of said handle is higher than the upper edge of the side wall of said smaller cover in the horizontal direction.

Preferably, the length of said handle is greater than the half of the inner diameter of said small cover.

Referred from the above description of the present invention, the juice cup cover of juice machine of the present invention has such advantages compared to the conventional technique:
firstly, a small cover with a handle is disposed on the big cover of the juice cup, the user can take off the small cover at any times, it is rather convenient for adding or reducing the seasonings or food into the juice cup;
secondly, a steam channel is formed by the space between the second blocking portion and the edge of the opening of the big cover, the depressed strips and the steam through holes, so the cup cover of the present invention has the function of releasing the steam pressure, and the steam will be horizontally dispersed from the bottom of the second blocking portion, the user will not be hurt, it is safe to use;
thirdly, the design of the steam channel of the present invention is ingenious, so the food will not be sprayed outside of the juice machine in the operation process, it is safe to use;
fourthly, the cylinder wall of the big cover and the small cover are all circular structure, the circular arc of which are streamlined and has no dead angle, so the dirt will not be easily assembled, it is convenient for cleaning, the design is rather human-oriented;
fifthly, the small cover is clearance fit with the cylinder wall of the big cover, so the cooperation is good, it is convenient for taking off or placing the small cover;
sixthly, the edge of the opening of the top surface of the big cover is close to the edge of the top surface of the big cover, it is convenient for the user to take off or place the small cover, and adding or reducing the seasonings and food into the cup;
seventhly, the terminal of the handle is higher than the top edge of the side wall of the small cover, and the length of the handle is greater than the half of the inner diameter of the small cover, it is convenient for the user to hold the handle for taking off or placing the small cover.

### Brief description of the drawings

Fig.1 is the sectional view of the juice cup cover of the juice machine of the present invention;
Fig.2 is the perspective structural view of the juice cup cover of the juice machine of the present invention.

### Detailed description of the embodiments

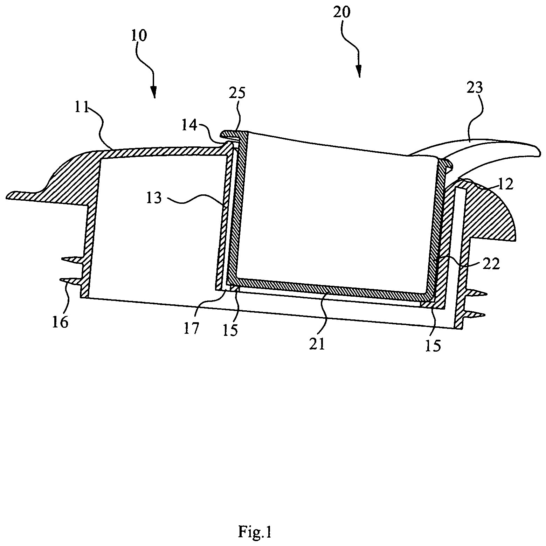

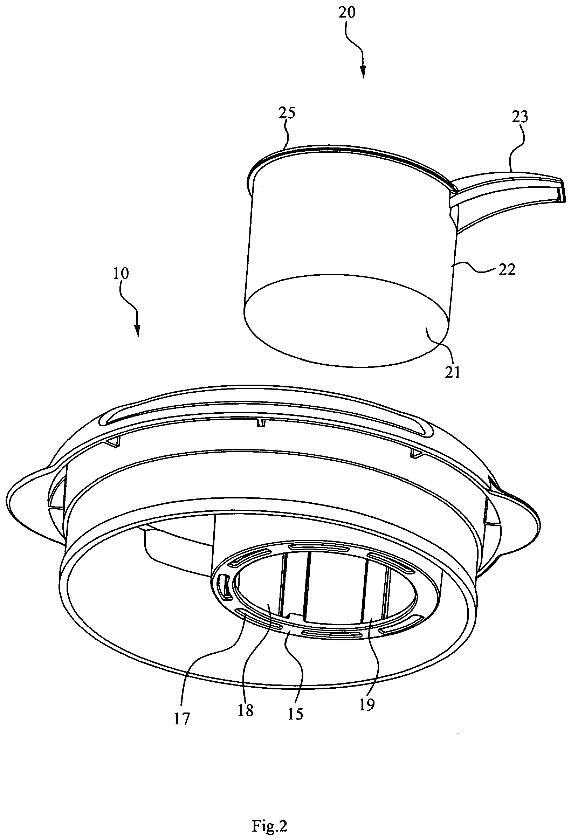

Please refer to the fig.1 and fig.2, the present invention will become apparent with the reference of the preferred embodiments and the accompanying drawings.

The juice cup cover of the juice machine of the present invention, comprising a big cover 10 connected to the cup body of the juice cup, a side of the center of the top surface 11 of said big cover 10 has a circular opening, the edge 14 of said circular opening is close to the edge of the top surface of said big cover the edge 14 of said circular opening extends into the big cover 10 and depressed to form a cylinder wall 13, said cylinder wall 13 is a cup body structure without top and bottom, the bottom edge of said cylinder wall 13 extends into the cylinder wall to form a first blocking portion 15, a plurality of steam through holes 17 are disposed on the first blocking portion 15; the inside of said cylinder wall 13 has a top surface 11 communicating with the big cover 10, and has protruding strips 19 disposed inside the cup body, a depressed strip 18 is disposed between each two adjacent protruding strips 19, said depressed strips 18 communicate with the inside of the cup body through said steam through holes 17; a small cover 20 is clearance fit with the inside of said cylinder wall 13, said small cover 20 is a circular cup body structure, the bottom surface 21 and the side wall 22 of which are closed, the upper end of which has an opening, the bottom surface 21 of said small cover 20 is connected to the first blocking portion 15 of the bottom edge of the cylinder wall 13.

The upper edge of the side wall 22 of the small cover 20 extends outward to form a second blocking portion 25, the vertical position of said second blocking portion 25 is higher than the edge 14 of the opening of the big cover 10, a steam channel is formed by the space between said second blocking portion 25 and the edge 14 of the opening of the big cover, the depressed strips 18 and the steam through holes 17.

The upper end of the side wall 22 of the small cover 20 extends outward to form a handle 23, the terminal of said handle 23 is higher than the upper edge of the side wall 22 of the small cover 20 in the horizontal direction, and the length of the handle 23 is greater than the half of the inner diameter of the small cover 20. Correspondingly, the outside of the edge 14 of the opening of the big cover 10 is integrated with a retaining groove 12 as one body, the inner end of the handle 23 of the small cover is partly disposed in the groove.

In the operation, the juice cup cover is connected to the juice cup body by the outer thread 16 of the big cover 10, after it has been connected to the juice cup body, it will needn't to remove the big cover 10 whenever it in the cool process or in the hot process, the food will be prevented from outflow by the cooperation of the bottom surface 21 of the small cover 20, the side wall 22 of the small cover 20, the second blocking portion 25 and the first blocking portion 15 on the big cover 10; the steam pressure will be released in the hot process with the steam channel formed by the space between the second blocking portion 25 and the edge 14 of the opening of the big cover, the depressed strips 18 and the steam through holes 17; the user can freely take off or place the small cover 20 from the cylinder wall 13 with the handle 23 on the upper end of the small cover 20, it is rather convenient to use. Meanwhile, the retaining groove 12 of the big cover 10 can restrict the position of the handle 23.

Another embodiment of the present invention is to dispose striped grooves on the wall of the small cover 20, the bottom of the cylinder wall 13 on the big cover 10 are disposed with steam through holes 17, the striped grooves communicate with the inside of the juice cup body through said steam through holes, the steam channel is formed by the steam through holes 17 and the striped grooves.

Although the present invention has been described with reference to the preferred embodiments thereof for carrying out the invention, it is apparent to those skilled in the art that a variety of modifications and changes may be made without departing from the scope of the present invention as defined by the appended claims.

### Industrial applicability

The juice cup cover of juice machine of the present invention, it disposes a small cover on the big cover of the juice cup, the consumer can take off the small cover to add or reduce the seasonings and the foods into the juice cup at any times, it is rather convenient for operation, meanwhile it can release the pressure, discharge the air and avoid overflow. The design is ingenious, the structure is reasonable, and it has a good industrial applicability.

## Claims

1. A juice cup cover for a juice machine, comprising a big cover (10) which is adapted to be connected, in operation, to the juice cup body of the juice machine, wherein the top surface of said big cover (10) has an opening, the edge of said opening extending into the big cover (10) and being depressed to form a cylinder wall, said cylinder wall (13) being a cup body structure without top and bottom, the bottom edge of said cylinder wall (13) extending into the cylinder wall (13) to form a first blocking portion (15), a plurality of steam through holes (17) being disposed on the first blocking portion (15); wherein the inside of said cylinder wall (13) has a top surface communicating with the big cover (10), and has protruding strips (19) disposed in the cup body structure, a depressed strip (18) being disposed between each two adjacent protruding strips (19), said depressed strips (18) communicating with the inside of the juice cup body through said steam through holes (17); wherein a small cover (20) is clearance fit with the inside of said cylinder wall (13), the upper end of the side wall of the small cover (20) having a handle (23).

2. The juice cup cover for a juice machine according to claim 1, wherein the opening of said big cover (10) is disposed on a side of the center of the top surface (11) of the big cover (10), the edge of said opening is close to the edge of the top surface of said big cover (10).

3. The juice cup cover for a juice machine according to claim 1 or 2, wherein said small cover is a cup body structure, the bottom surface (21) and the side wall (22) of which are closed, the upper end of which has an opening, the bottom surface of said small cover (20) is connected to the first blocking portion (15) of the bottom edge of the cylinder wall (13).

4. The juice cup cover for a juice machine according to any of claims 1 to 3, wherein the upper edge of side wall (22) of said small cover (20) extends outward to form a second blocking portion (25), the vertical position of said second blocking portion is higher than the edge position of the opening of said big cover (10), a steam channel is formed by the space between said second blocking portion (25) and the edge (14) of the opening of said big cover (10), said depressed strips and said steam through holes (17).

5. The juice cup cover for a juice machine according to any of claims 1 to 4, wherein said cylinder wall (13) is a circular cylinder wall (13), correspondingly, said small cover (20) is a circular cup body structure, the outer side wall of said small cover (20) is closely attached to the protruding strips (19) of said cylinder wall (13).

6. The juice cup cover for a juice machine according to any of claims 1 to 5, wherein the upper end of the side wall (22) of said small cover (20) extends outward to form said handle (23), and the terminal of said handle (23) is higher than the upper edge of the side wall (22) of said small cover (20) in the horizontal direction.

7. The juice cup cover for a juice machine according to any of claims 1 to 6, wherein a handle retaining groove (12) is integrated with the outside of the edge position of the opening of the big cover (10) as one body, the inner end of the handle (23) is partly disposed in said groove (12).

8. The juice cup cover for a juice machine according to any of claims 1 to 7, wherein the length of said handle (23) is greater than the half of the inner diameter of said small cover (20).

9. Juice cup for a juice machine, wherein the juice cup comprises a juice cup cover as claimed in any of claims 1 to 8.

10. Juice machine comprising a juice cup cover according to any of claims 1 to 8.

## Patentansprüche

1. Saftbecherdeckel für eine Saftmaschine, der einen großen Deckel (10) aufweist, der geeignet ist, um im Betrieb mit dem Saftbecherkörper der Saftmaschine verbunden zu werden, wobei die obere Oberfläche des großen Deckels (10) eine Öffnung hat, der Rand der Öffnung sich in den großen Deckel (10) erstreckt und vertieft ist, um eine Zylinderwand zu bilden, wobei die Zylinderwand (13) eine Becherkörperstruktur ohne Oberseite und Boden ist, wobei der untere Rand der Zylinderwand (13) sich in die Zylinderwand (13) erstreckt, um einen ersten Dichtungsabschnitt (15) zu bilden, wobei mehrere Dampfdurchgangslöcher (17) auf dem ersten Dichtungsabschnitt (15) angeordnet sind; wobei das Innere der Zylinderwand (13) eine obere Oberfläche hat, die mit dem großen Deckel (10) in Verbindung steht, und vorstehende Leisten (19) hat, die in der Becherkörperstruktur angeordnet sind, wobei eine vertiefte Leiste (18) zwischen jeweils zwei benachbarten vorstehenden Leisten (19) angeordnet ist, wobei die vertieften Leisten (18) durch die Dampfdurchgangslöcher (17) mit dem Inneren des Saftbecherkörpers in Verbindung stehen; wobei ein kleiner Deckel (20) als Spielpassung in dem Inneren der Zylinderwand (13) ist, wobei das obere Ende der Seitenwand des kleinen Deckels (20) einen Griff (23) hat.

2. Saftbecherdeckel für eine Saftmaschine, nach Anspruch 1, wobei die Öffnung des großen Deckels (10) auf einer Seite der Mitte der oberen Oberfläche (11) des großen Deckels (10) angeordnet ist, wobei der Rand der Öffnung nahe an dem Rand der oberen Oberfläche des großen Deckels (10) ist.

3. Saftbecherdeckel für eine Saftmaschine nach Anspruch 1 oder 2, wobei der kleine Deckel eine Becherkörperstruktur ist, deren untere Oberfläche (21) und Seitenwand (22) geschlossen sind, wobei ihr oberes Ende eine Öffnung hat, wobei die untere Oberfläche des kleinen Deckels (20) mit dem ersten Dichtungsabschnitt (15) des unteren Rands der Zylinderwand (3) verbunden ist.

4. Saftbecherdeckel für eine Saftmaschine nach einem de Ansprüche 1 bis 3, wobei der obere Rand der Seitenwand (22) des kleinen Deckels (20) sich auswärts erstreckt, um einen zweiten Dichtungsabschnitt (25) zu bilden, wobei die vertikale Position des zweiten Dichtungsabschnitts höher als die Randposition der Öffnung des großen Deckels (10) ist, wobei durch den Raum zwischen dem zweiten Dichtungsabschnitt (25) und dem Rand (14) der Öffnung des großen Deckels (10), die vertieften Leisten und die Dampfdurchgangslöcher (17) ein Dampfkanal ausgebildet wird.

5. Saftbecherdeckel für eine Saftmaschine nach einem der Ansprüche 1 bis 4, wobei die Zylinderwand (13) eine kreisförmige Zylinderwand (13) ist, der kleine Deckel (20) entsprechend eine kreisförmige Becherkörperstruktur ist, wobei die Außenseitenwand des kleinen Deckels (20) eng an den vorstehenden Leisten (19) der Zylinderwand (13) befestigt ist.

6. Saftbercherdeckel für eine Saftmaschine nach einem der Ansprüche 1 bis 5, wobei das obere Ende der Seitenwand (22) des kleinen Deckels (20) sich von dem Griff (23) nach außen erstreckt und das Ende des Griffs (23) höher als der obere Rand der Seitenwand (22) des kleinen Deckels (20) in der Horizontalrichtung ist.

7. Saftbecherdeckel für eine Saftmaschine nach einem der Ansprüche 1 bis 6, wobei eine Griffhaltenut (12) mit dem Äußeren der Randposition der Öffnung des großen Deckels (10) als ein Körper integriert ist, wobei das innere Ende des Griffs (23) teilweise in der Nut (12) angeordnet ist.

8. Saftbecherdeckel für eine Saftmaschine nach einem der Ansprüche 1 bis 7, wobei die Länge des Griffs (23) größer als die Hälfte des Innendurchmessers des kleinen Deckels (20) ist.

9. Saftbecher für eine Saftmaschine, wobei der Saftbecher einen Saftbecherdeckel nach einem der Ansprüche 1 bis 8 aufweist.

10. Saftmaschine, die einen Saftbecherdeckel nach einem der Ansprüche 1 bis 8 aufweist.

## Revendications

1. Couvercle de récipient à jus pour une machine à jus, comprenant un grand couvercle (10) qui est apte à être relié, en fonctionnement, au corps de récipient à jus de la machine à jus, la surface supérieure dudit grand couvercle (10) ayant une ouverture, le bord de l'ouverture s'étendant vers l'intérieur du grand couvercle (10) et étant abaissé pour former une paroi cylindrique, ladite paroi cylindrique (13) étant une structure de corps de récipient sans haut ni fond, le bord inférieur de la paroi cylindrique (13) s'étendant vers l'intérieur de la paroi cylindrique (13) pour former une première partie de blocage (15), plusieurs trous traversants pour la vapeur (17) étant disposés sur la première partie de blocage (15) ; l'intérieur de la paroi cylindrique (13) présente une surface supérieure qui communique avec le grand couvercle (10), et présente des bandes saillantes (19) qui sont disposées dans la structure de corps de récipient, une bande en creux (18) étant disposée entre chaque paire de bandes saillantes (19) voisines, lesdites bandes en creux (18) communiquant avec l'intérieur du corps de récipient à jus grâce aux trous traversants pour la vapeur (17) ; un petit couvercle (20) étant ajusté avec du jeu à l'intérieur de la paroi cylindrique (13), l'extrémité supérieure de la paroi latérale du petit couvercle (20) présentant une poignée (23).

2. Couvercle de récipient à jus pour une machine à jus selon la revendication 1, dans lequel l'ouverture du grand couvercle (10) est disposée sur un côté du centre de la surface supérieure (11) du grand couvercle (10), le bord de ladite ouverture étant situé près du bord de la surface supérieure du grand couvercle (10).

3. Couvercle de récipient à jus pour une machine à jus selon la revendication 1 ou 2, dans lequel le petit couvercle est une structure de corps de récipient dont la surface inférieure (21) et la paroi latérale (22) sont fermées et dont l'extrémité supérieure présente une ouverture, la surface inférieure dudit petit couvercle (20) est reliée à la première partie de blocage (15) du bord inférieur de la paroi cylindrique (13).

4. Couvercle de récipient à jus pour une machine à jus selon l'une quelconque des revendications 1 à 3, dans lequel le bord supérieur de la paroi latérale (22) du petit couvercle (20) s'étend vers l'extérieur pour former une seconde partie de blocage (25), la position verticale de ladite seconde partie de blocage se trouve plus haut que la position du bord de l'ouverture du grand couvercle (10), un conduit de vapeur est formé par l'espace entre la seconde partie de blocage (25) et le bord (14) de l'ouverture du grand couvercle (10), les bandes en creux et les trous traversants pour la vapeur (17).

5. Couvercle de récipient à jus pour une machine à jus selon l'une quelconque des revendications 1 à 4, dans lequel la paroi cylindrique (13) est une paroi cylindrique circulaire (13), le petit couvercle (2) est en conséquence une structure de corps de récipient circulaire, la paroi latérale extérieure du petit couvercle (20) est fixée aux bandes saillantes (19) de la paroi cylindrique (13).

6. Couvercle de récipient à jus pour une machine à jus selon l'une quelconque des revendications 1 à 5, dans lequel l'extrémité supérieure de la paroi latérale (22) du petit couvercle (20) s'étend vers l'extérieur pour former la poignée (23), et l'extrémité de ladite poignée (23) se trouve plus haut que le bord supérieur de la paroi latérale (22) du petit couvercle (20) dans le sens horizontal.

7. Couvercle de récipient à jus pour une machine à jus selon l'une quelconque des revendications 1 à 6, dans lequel une rainure de retenue de poignée (12) est intégrée à l'extérieur du bord de l'ouverture du grand couvercle (10), d'une seule pièce, l'extrémité intérieure de la poignée (23) est disposée en partie dans ladite rainure (12).

8. Couvercle de récipient à jus pour une machine à jus selon l'une quelconque des revendications 1 à 7, dans lequel la longueur de la poignée (23) est supérieure à la moitié du diamètre intérieur du petit couvercle (20).

9. Récipient à jus pour une machine à jus, le récipient à jus comprenant un couvercle de récipient à jus selon l'une quelconque des revendications 1 à 8 .

10. Machine à jus comprenant un couvercle de récipient à jus selon l'une quelconque des revendications 1 à 8.
